Europäisches Patentamt

European Patent Office

Office européen des brevets

(11) Publication number: **0 138 576**
**B1**

(12) **EUROPEAN PATENT SPECIFICATION**

(45) Date of publication of patent specification: **28.12.88**

(21) Application number: **84306931.1**

(22) Date of filing: **11.10.84**

(51) Int. Cl.⁴: **G 11 B 23/023**

(54) **Magnetic type cartridge carrier.**

(30) Priority: **20.10.83 US 543723**

(43) Date of publication of application:
**24.04.85 Bulletin 85/17**

(45) Publication of the grant of the patent:
**28.12.88 Bulletin 88/52**

(84) Designated Contracting States:
**DE FR GB**

(56) References cited:
**EP-A-0 141 112**
**DE-A-2 647 663**
**FR-A-1 253 365**
**FR-A-2 122 790**
**GB-A-2 021 072**
**GB-A-2 132 075**
**US-A-3 904 259**
**US-A-4 111 502**
**US-A-4 117 931**
**US-A-4 180 299**
**US-A-4 231 625**
**US-A-4 293 075**
**US-A-4 339 162**

(73) Proprietor: **International Business Machines Corporation**
**Old Orchard Road**
**Armonk, N.Y. 10504 (US)**

(72) Inventor: **Barnes, Raymond Willis**
**27 Laurelwood Drive**
**Lawrenceville New Jersey, 08648 (US)**
Inventor: **Fontaine, Serge Emanuel**
**905 Fox Run Drive**
**Plainsboro New Jersey 08536 (US)**
Inventor: **Nussbaum, Joyce Deanne**
**52 Wilk Road**
**Edison New Jersey 08837 (US)**
Inventor: **Reeves, Matthew Steven**
**22-13 Quail Ridge Drive**
**Plainsboro New Jersey 08536 (US)**

(74) Representative: **Appleton, John Edward**
**IBM United Kingdom Limited Intellectual Property Department Hursley Park**
**Winchester Hampshire SO21 2JN (GB)**

Courier Press, Leamington Spa, England.

## Description

BACKGROUND OF THE INVENTION
Field of the Invention

This invention relates to a carrier for containing a plurality of tape cartridges which may be placed in a storage rack, transportation cart or carry pack and secured by a support and locking apparatus.

Description of Prior Art

Since the introduction of tapes and the like, which are disposed within cartridges, cassettes or similar containers, a number of carry cases and holders have been available in the art for receiving, supporting and storing such cassettes, cartridges or the like. Usually, such holders are for a specific purpose, for example, use as a carrying case or for storage in a stationary location such as on a shelf.

U.S. Patent 4,293,075 issued Oct. 6, 1981 to Veralrud and entitled CABINET FOR HOLDING MAGNETIC TAPE CARTRIDGES AND CASSETTES describes a multishelf cabinet for storing several different types of tape units having different dimensions. The shelves are sloped from front to back and include molded sidewall steps such that endless tape cartridges, reel-to-reel cassettes and cassettes in boxes of different sizes may be retained in the cabinet by the appropriate dimensional sidewall steps.

U.S. Patent 3,907,116 issued Sept. 23, 1975 to Wolf et al entitled CASSETTE RACK describes a holder for both boxed and unboxed magnetic reel-to-reel cassettes which also includes rearward sloping support shelves in the form of stepped sidewalls of different dimensions to retain the boxed cassettes and the smaller dimensioned unboxed cassettes.

US Patent 4,111,502 describes an automobile tape storage case which includes a housing having a base, a pair of upwardly extending end walls, an upwardly extending rear wall, an open top, and an upwardly extending front wall having a plurality of openings therethrough. A plurality of intermediate vertical walls are disposed in the housing thereby forming a plurality of chambers therein, wherein each opening communicates with one of the chambers. A drawer is slideable received into each of the openings, wherein each drawer holds a tape therein.

In the prior art, the storage units are for a single purpose, i.e., stationary storage on a shelf or in a console, or as a portable carry case. The cassettes, cartridges or the like are disposed on endwall rails or flanges and are retained in place by gravity due to rearward slope or the like. There is no positive locking feature for maintaining the cartridges or cassettes securely in the holders.

The present invention differs from the prior art as will be seen from the following description.

According to the invention there is provided, a magnetic tape cartridge carrier for receiving magnetic tape cartridges having the same height, width and length dimensions and a carrier support frame in which, in operation, the carrier is placed, comprising:

a frame including bottom, rear and spaced sidewall members forming a substantially rectangular enclosure,

a plurality of spaced wall members extending between said top and said bottom member of said frame and from the front of said enclosure to the rear member to separate said enclosure into a plurality of separate enclosures dimensioned to accommodate said magnetic cartridges,

a plurality of movable members, a separate one of each being slidably disposed on the bottom of and projecting from each of said plurality of magnetic tape cartridge accommodating enclosures, each of said movable members being operable to convey a said magnetic tape cartridge out of its magnetic tape cartridge accommodating enclosure when said movable member is slid out of said enclosure,

a first pair of apertures adjacent to the top of the frame and a second pair of apertures, adjacent to said bottom member, the first and second, pairs of apertures being engageable by retaining means on said carrier support frame, characterised in that

the carrier comprises at least one shelf member within said enclosure, mounted to said sidewalls and extending parallel to said top and said bottom member, to separate at least two smaller enclosures within said frame, said plurality of spaced wall members extends between the at least one shelf member and a top member and said bottom member of said frame to separate said at least two smaller enclosures into a plurality of separate enclosures dimensioned to accommodate said magnetic cartridges, the first pair of apertures, is adjacent to the front of said top member and the second pair of apertures to the front of said bottom member of said frame and that said carrier support frame has flanges being spaced an appropriate distance such that the carrier may be fitted between them and containing on their lower surfaces spring element retaining means for engaging the first pair of apertures and on their upper surfaces projections for engaging the second pair of apertures.

In order that the invention may be fully understood it will now be described by way of example with reference to the accompanying drawings in which:

Fig. 1 is a schematic illustration of one embodiment of a tape cartridge carrier which may be securely stored in a mass storage rack, a transportation cart or an individual carry pack.

Fig. 2 is a schematic illustration of a side view of the carrier of Fig. 1 showing the detail of a pull-tab for removing a cartridge.

FIG. 3 is a schematic illustration showing the manner in which the carriers of FIG. 1 may be securely mounted in a mass storage rack.

FIGS. 4, 5 and 6 are illustrations of how the carriers of FIG. 1 may be placed onto the mass storage rack of FIG. 3.

FIG. 7 is a schematic illustration showing how the carriers of FIG. 1 may be stored in a transportation cart.

FIG. 8 is a schematic illustration showing how the carriers of FIG. 1 may be stored in a portable carry case.

Magnetic tapes of the type which are contained in cartridges are used in a number of industries, one in particular being associated with electronic typewriters wherein text material is stored on the tapes. In such instance the magnetic tapes are subject to being retained in storage, retrieved from storage, and periodically moved from location to location. It is desirable that a single container for such cartridges be provided which may be easily placed in and removed from bulk storage, and which may also be used to retain the cartridges when such cartridges are moved from place to place.

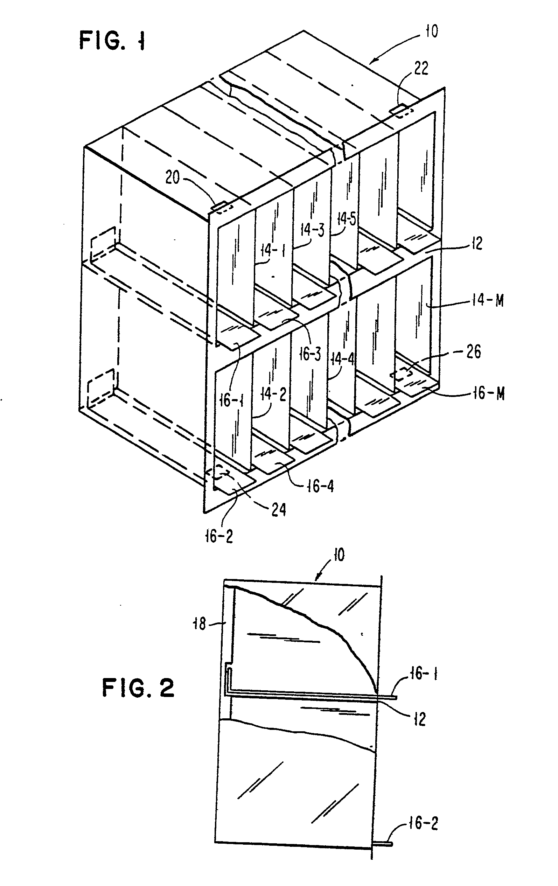

FIG. 1 illustrates a carrier for magnetic tape cartridges according to the present invention. The carrier includes top, bottom, left side and right side members which form a rectangular frame 10. A centre member 12 intermediate to and parallel to the top and bottom members divides frame 10 into upper and lower compartments. A plurality of vertical members 14-1, 14-2, 14-3 ... 14-M are spaced inside frame 10 parallel to the left and right side members. Vertical members 14-1 through 14-M extend the depth of frame 10, thereby dividing the upper and lower compartments thereof into a plurality of separate recesses, the dimensions of which are predetermined to be slightly greater than the dimensions of the magnetic tape cartridges to be stored.

In each recess, at the bottom thereof, a slidable member 16-1, 16-2, 16-3 ... 16-M is disposed. Each of the members 16-1 through 16-M terminates in a right angle bend and also extends past the edge of bottom member and centre member 12. Thus, when a magnetic tape cartridge is placed in any of the recesses, the end of appropriate slidable members 16-1 ... 16-M at the bottom of the recess is grasped and pulled in order to easily remove the desired tape cartridge from the recess. When the tape cartridge is manually replaced in the recess, it will cause the slidable member to return to the position shown in FIG. 1.

Referring to FIG. 2, a side elevation view is shown illustrating how the right angle portion of the slidable elements 16-1 through 16-M may be fitted into corresponding recesses in a back member 18 of the element 10. An alternative to slidable members 16-1 through 16-M having a right angle termination would be to have slidable members 16-1 through 16-M flat, but have a high friction upper surface, such as having a rubberized coating on which the magnetic cartridge would be retained during input and output movements.

A high friction strip, such as a rubber strip can be mounted along the length of the front of shelf 12 and the front of the bottom member. The rubber strip is dimensioned to be slightly higher than the front of shelf 12 and the front of the bottom member.

The carrier shown in FIG. 1 further includes apertures 20, 22, 24 and 26 located on the front corners of the top and bottom elements of frame 10 as shown. These apertures serve to provide a simple and rapid locking and retaining scheme whereby the carrier may be placed, along with other carriers, on a mass storage rack.

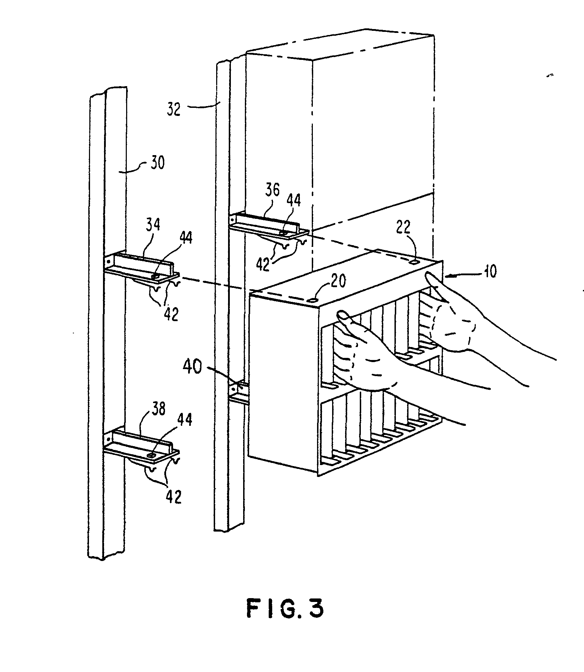

Referring to FIG. 3, a portion of the mass storage rack is shown including vertical support members 30 and 32. Flanges 34, 36, 38 and 40 are fastened onto vertical support members 30 and 32. Flanges 34, 36, 38 and 40, which are T-shaped in cross section are spaced an appropriate distance such that the carrier may be fitted between the flanges. The lower surface of the flanges contain leaf springs 42 while the upper surfaces, on each side of the vertical portion of the flange, contain bosses 44.

Thus, when the carrier is moved forward in FIG. 3 it will rest on the upper surface of the flanges 38 and 40 and the bosses on the upper surfaces of flanges 38 and 40 will insert through the lower apertures 24 and 26. The springs on the bottom surfaces of flanges 34 and 36 will snap into corresponding upper apertures 20 and 22 and the carrier will be locked into the flanges 34, 36, 38 and 40 by means of the top and bottom apertures 20, 22, 24 and 26.

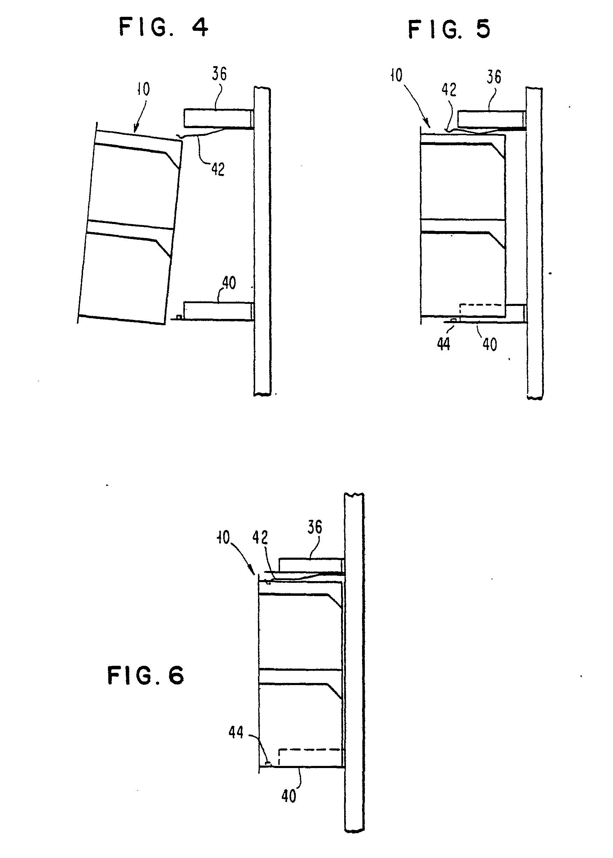

FIGS. 4, 5 and 6 illustrate in sequence the manner in which the carrier is moved forward, inserted and locked into the flanges 30, 32, 34 and 36.

It should be noted that in FIG. 3 the flanges 34, 36, 38 and 40 include a spring and boss on the other side of the vertical portion of the T in order to accommodate another carrier. In this manner, a large number of carriers may be locked into the vertical support members to provide a mass storage array, for example, covering an entire wall or disposed in aisles.

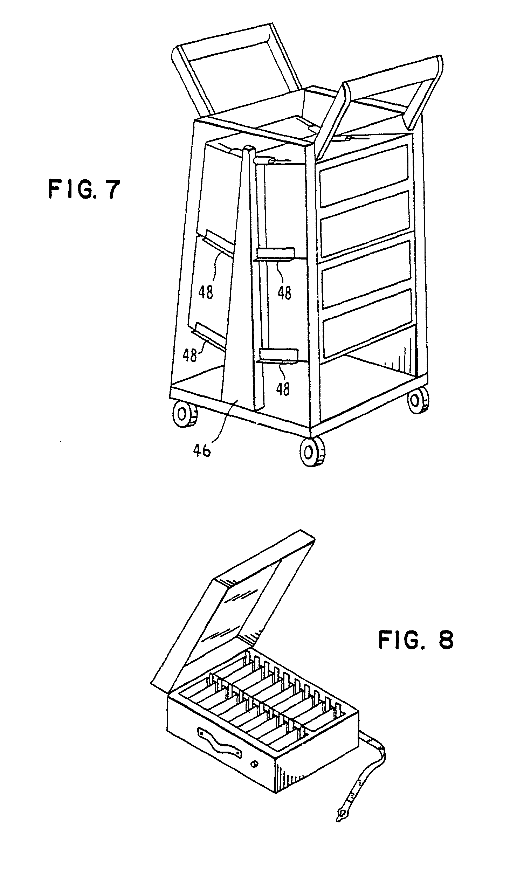

An advantage of the carrier shown in FIG. 1 is that it may be inserted in apparatus other than the mass storage rack shown in FIG. 3. Referring to FIG. 7, a movable cart is shown including a vertical support member 46 on which are mounted a plurality of flanges 48 similar to flanges 34, 36, 38 and 40 of FIG. 3. The carriers are placed in the flanges in the same fashion as described relative to FIG. 3 and are retained by springs and bosses within the apertures 20, 22, 24 and 26 of the carrier. The cart of FIG. 7 further includes wheels and handles so it may be readily moved about. Thus, a user could enter the mass storage area, remove selected carriers from the mass storage racks and place them securely in the cart for transportation to another location.

Finally, if only one carrier at a time is required, a hand-held transport into which the carrier is fitted may be provided as shown in FIG. 8.

It is seen, therefore, that a total system has been described wherein a unique magnetic tape cartridge carrier as shown in FIG. 1, which contains a plurality of slidably accessible tape cartridges, may be used and stored in a number of different environments including a mass storage rack having a locking scheme which cooperates with the carrier structure, a movable cart having a similar locking scheme, and a hand-held transport.

While the invention has been particularly shown and described with reference to a preferred embodiment thereof, it will be understood by those skilled in the art that for example, instead of a single centre shelf member 12 providing upper and lower rows of enclosures, as shown in FIG. 1, a plurality of such shelves may be provided for dividing the carrier into three or more rows of enclosures.

## Claim

1. A magnetic tape cartridge carrier for receiving magnetic tape cartridges having the same height, width and length dimensions and a carrier support frame in which, in operation, the carrier is placed, comprising:
   a frame (10) including bottom, rear (18) and spaced sidewall members forming a substantially rectangular enclosure,
   a plurality of spaced wall members (14) extending between said top and said bottom member of said frame and from the front of said enclosure to the rear member (18) to separate said enclosure into a plurality of separate enclosures dimensioned to accommodate said magnetic cartridges,
   a plurality of movable members (16), a separate one of each being slidably disposed on the bottom of and projecting from each of said plurality of magnetic tape cartridge accommodating enclosures, each of said movable members (16) being operable to convey a said magnetic tape cartridge out of its magnetic tape cartridge accommodating enclosure when said movable member is slid out of said enclosure,
   a first pair of apertures (20, 22) adjacent to the top of the frame (10) and a second pair of apertures (24, 26) adjacent to said bottom member, the first (20, 22) and second (24, 26) pairs of apertures being engageable by retaining means on said carrier support frame, characterised in that
   the carrier comprises at least one shelf member (12) within said enclosure, mounted to said sidewalls and extending parallel to said top and said bottom member, to separate at least two smaller enclosures within said frame, said plurality of spaced wall members (14) extends between the at least one shelf member (12) and a top member and said bottom member of said frame to separate said at least two smaller enclosures into a plurality of separate enclosures dimensioned to accommodate said magnetic cartridges, the first pair of apertures (20, 22) is adjacent to the front of said top member and the second pair of apertures (24, 26) to the front of said bottom member of said frame and that said carrier support frame has flanges (34, 36, 38, 40) being spaced an appropriate distance such that the carrier may be fitted between them and containing on their lower surfaces spring element retaining means for engaging the first pair of apertures (20, 22) and on their upper surfaces projections for engaging the second pair of apertures (24, 26).

## Patentanspruch

1. Magnetbandkassettenträger zur Aufnahme von Magnetbandkassetten mit einheitlichen Höhen-, Breiten- und Längenabmessungen und einem Trägerhalterahmen (30), in welchem bei Gebrauch der Träger plaziert ist, beinhaltend:
   einen Rahmen (10) mit Bodenteil, Rückwandteil (18) und beabstandeten Seitenwandteilen, die ein im wesentlichen rechteckiges Gehäuse bilden,
   eine Mehrzahl beabstandeter Wandteile (14), die sich zwischen dem Decken- und Bodenteil des Rahmens und in der Vorderseite des Gehäuses zum Rückenwandteil (18) erstrecken, um das Gehäuse zur Unterbringung der Magnetkassetten in eine Mehrzahl von getrennten Abteilungen zu trennen,
   eine Mehrzahl bewegbarer Teile (16), von denen jedes einzelne verschiebbar auf dem Boden von jeder der Magnetbandkassetten beherbergenden Abteilungen angeordnet ist und über diese jeweils herausragt, wobei jedes der bewegbaren Teile (16) so bedienbar ist, daß die Magnetbandkassette aus ihrer Magnetbandkassetten beherbergenden Abteilung herausbefördert wird, wenn das bewegbare Teil aus der Abteilung herausgeschoben wird,
   ein erstes paar von Öffnungen (20, 22) nahe am Deckenteil des Rahmens (10) und ein zweites Paar von Öffnungen (24, 26) nahe dem Bodenteil, wobei das erste (20, 22) und zweite (24, 26) Paar von Öffnungen mit Sperrmitteln auf dem Trägerhalteteil in Eingriff bringbar ist, dadurch gekennzeichnet, daß
   der Träger mindestens ein Fachbretteil innerhalb Gehäuses aufweist, das an den Seitenteilen befestigt ist und sich parallel zu dem Decken- und Bodenteil erstreckt, um zumindest zwei kleinere Gehäuse innerhalb des Rahmens abzutrennen, wobei sich die beabstandeten Wandteile (14) zwischen einem Fachbretteil (12) und dem Deckenteil, bzw. dem Bodenteil des Rahmens erstrecken, um die wenigstens zwei kleineren Gehäuse in eine Mehrzahl von getrennten Abteilungen zu trennen, die zur Unterbringung der Magnetkassetten dimensioniert sind,
   wobei das erste Paar Öffnungen (28, 22) nahe der Vorderseite Deckenteils und das zweite Paar Öffnungen (24, 26) nahe der Vorderseite des Bodenteils des Rahmens angeordnet sind und wobei der Trägerhalterahmen Streben (34, 36, 38, 40) aufweist, die im geeigneten Abstand angeordnet sind, so daß der Träger zwischen ihnen befestigbar ist, und die an ihren unteren Seiten Federelement-Sperrmittel zum Ineingriffbringen mit dem ersten Paar Öffnungen (20, 22) und an ihren oberen Seiten Erhebungen zum in Ineingriffbringen mit dem zweiten Paar Öffnungen (24 26) aufweisen,.

## Revendication

1. Porte cartouche à bande magnétique pour contenir des cartouches à bande magnétique ayant la même hauteur, la même largeur et la

EP 0 138 576 B1

même longueur et cadre de support de porte cartouche dans lequel, pendant l'utilisation, le porte cartouche est installé comprenant:

un cadre (10) comprenant des éléments supérieur, de fond, d'arrière (18) et de côté espacés formant une enceinte sensiblement rectangulaire,

une pluralité d'éléments de paroi espacés (14) s'étendant entre lesdits éléments supérieur et de fond dudit cadre et de l'avant de ladite enceinte à l'élément arrière (18) pour séparer ladite enceinte en une pluralité de casiers séparés ayant des dimensions adaptées à recevoir lesdites cartouches magnétiques,

une pluralité d'éléments mobiles (16), chacun d'entre eux étant disposé de façon à pouvoir glisser sur le fond et faisant saillie de chacun des casiers adaptés aux cartouches à bande magnétique de ladite pluralité, chacun desdits éléments mobiles (16) étant manipulable pour convoyer une dite cartouche à bande magnétique en dehors de son casier de réception de cartouche à bande magnétique lorsque ledit élément mobile est déplacé par coulisse ment en dehors dudit casier,

une première paire d'ouvertures (20, 22) du côté supérieur du cadre (10) et une seconde paire d'ouvertures (24, 26) du côté de l'élément de fond, les première (20, 22) et seconde (24, 26) paires d'ouverture pouvant être engagées par des moyens de retenue sur ledit cadre de support de porte cartouche, caractérisé en ce que

le porte cartouche comprend au moins un élément d'étagère (12) à l'intérieur de ladite enceinte, monté sur lesdits éléments de côté et s'étendant parallèlement auxdits éléments supérieur et de fond, pour déterminer au moins deux plus petites enceintes à l'intérieur dudit cadre,

ladite pluralité d'éléments de paroi espacés (14) s'étend entre l'élément étagère (12) et un élément de dessus et ledit élément de fond dudit cadre pour séparer lesdites au moins deux plus petites enceintes en une pluralité de casiers séparés de dimensions adaptées à recevoir lesdites cartouches magnétiques, la première paire d'ouvertures (20, 22) étant située à côté de l'avant dudit élément de dessus et la seconde paire d'ouvertures (24, 26) étant située à l'avant dudit élément de fond dudit cadre, et

ledit cadre de support de porte cartouche a des brides (34, 36, 38, 40) qui sont espacées d'une distance convenable pour que le porte cartouche puisse être ajusté entre elles et comprenant, sur leurs surfaces inférieures, des moyens de retenue à ressort pour s'engager dans la première paire d'ouvertures (20, 22) et, sur leurs surfaces supérieures, des saillies pour s'engager dans la seconde paire d'ouvertures (24, 26).

5

FIG. 1

FIG. 2

1

FIG. 3

## FIG. 4

## FIG. 5

## FIG. 6

FIG. 7

FIG. 8